# EUROPEAN PATENT APPLICATION

(11) **EP 3 901 899 A1**
(43) Date of publication of application: **27.10.2021**
(21) Application number: 21167584.8
(22) Date of filing: 09.04.2021
(51) Int. Cl.: G06T 5/00

(54) **IMAGING SYSTEM AND METHOD INCORPORATING SELECTIVE DENOISING**

(30) Priority: 20.04.2020 US 202016852838
(71) Applicant: Varjo Technologies Oy, 00100 Helsinki (FI)
(72) Inventor: Ollila, Mikko, 33710 Tampere (FI)
(74) Representative: Aaltonen, Janne Lari Antero

(57) **Abstract**

Disclosed is an imaging system (100) for producing extended-reality images for a display apparatus (102). The imaging system comprises a first camera (104), a second camera (106) and at least one processor (108). The processor is configured to: control the first camera and the second camera to capture pairs of first images and second images of a real-world environment, respectively, wherein a given pair comprises a first image and a second image captured for a first eye and a second eye of a user, respectively; denoise the first image and the second image at a first denoise level and a second denoise level, respectively; and process the first image and the second image, upon denoising, to generate a first extended-reality image and a second extended-reality image to be rendered via the display apparatus, respectively.

## Description

### TECHNICAL FIELD

The present disclosure relates generally to image denoising; and more specifically, to imaging systems for producing extended-reality images for display apparatuses, said imaging systems incorporating selective denoising. The present disclosure also relates to methods for producing extended-reality images for display apparatuses, said methods incorporating selective denoising.

### BACKGROUND

Nowadays, with increase in number of images being captured every day, there is an increased demand for image processing. Such a demand is especially critical in case of evolving technologies such as extended-reality. A typical image processing operation that is widely used is image denoising, as the captured images are extremely prone to introduction of noise therein. Images that are degraded by noise are generally not used directly to generate extended-reality environments for extended-reality devices. Notably, noise adversely affects image aesthetics, which is undesirable for the extended-reality environments.

Presently, Graphics Processing Units (GPUs) are employed for denoising noisy images. Notably, the denoising operation is a computationally heavy operation, especially due to high-resolution, small pixel size, and high frame-rate requirements in extended-reality devices. In such a case, occupancy of the GPU resources is extremely high when performing the denoising operation. However, the GPU resources are also needed for other graphics processing tasks, such as image enhancement tasks, image generation tasks, and the like. Performing the denoising operation along with the other graphics processing tasks causes an immense computational burden on GPUs.

Therefore, in light of the foregoing discussion, there exists a need to overcome the aforementioned drawbacks associated with overloading of GPUs, particularly due to image denoising.

### SUMMARY

The present disclosure seeks to provide an imaging system for producing extended-reality images for a display apparatus. The present disclosure also seeks to provide a method of producing extended-reality images for a display apparatus. The present disclosure seeks to provide a solution to the existing problem of GPU overburdening due to image denoising. An aim of the present disclosure is to provide a solution that overcomes at least partially the problems encountered in prior art, and provides an imaging system that is capable of producing, without excessively burdening its processor, extended-reality images for a display apparatus.

In one aspect, an embodiment of the present disclosure provides an imaging system for producing extended-reality images for a display apparatus, the imaging system comprising a first camera, a second camera and at least one processor configured to:
- control the first camera and the second camera to capture pairs of first images and second images of a real-world environment, respectively, wherein a given pair comprises a first image and a second image captured for a first eye and a second eye of a user, respectively;
- denoise the first image and the second image at a first denoise level and a second denoise level, respectively; and
- process the first image and the second image, upon denoising, to generate a first extended-reality image and a second extended-reality image to be rendered via the display apparatus, respectively.

In another aspect, an embodiment of the present disclosure provides a method of producing extended-reality images for a display apparatus, the method comprising:
- capturing pairs of first images and second images of a real-world environment, respectively, wherein a given pair comprises a first image and a second image captured for a first eye and a second eye of a user, respectively;
- denoising the first image and the second image at a first denoise level and a second denoise level, respectively; and
- processing the first image and the second image, upon denoising, to generate a first extended-reality image and a second extended-reality image to be rendered via the display apparatus, respectively.

Embodiments of the present disclosure substantially eliminate or at least partially address the aforementioned problems in the prior art, and enable generation of extended-reality images from denoised images, in a manner that the at least one processor of the imaging system is not excessively computationally overburdened.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
FIG. 1 illustrates a block diagram of architecture of an imaging system for producing extended-reality images for a display apparatus, in accordance with an embodiment of the present disclosure;
FIG. 2 illustrates an exemplary environment in which an imaging system is used, in accordance with an embodiment of the present disclosure;
FIG. 3 illustrates how two consecutive pairs of first images and second images are denoised, in accordance with an embodiment of the present disclosure; and
FIG. 4 illustrates steps of a method of producing extended-reality images for a display apparatus, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In one aspect, an embodiment of the present disclosure provides an imaging system for producing extended-reality images for a display apparatus, the imaging system comprising a first camera, a second camera and at least one processor configured to:
- control the first camera and the second camera to capture pairs of first images and second images of a real-world environment, respectively, wherein a given pair comprises a first image and a second image captured for a first eye and a second eye of a user, respectively;
- denoise the first image and the second image at a first denoise level and a second denoise level, respectively; and
- process the first image and the second image, upon denoising, to generate a first extended-reality image and a second extended-reality image to be rendered via the display apparatus, respectively.

In another aspect, an embodiment of the present disclosure provides a method of producing extended-reality images for a display apparatus, the method comprising:
- capturing pairs of first images and second images of a real-world environment, respectively, wherein a given pair comprises a first image and a second image captured for a first eye and a second eye of a user, respectively;
- denoising the first image and the second image at a first denoise level and a second denoise level, respectively; and
- processing the first image and the second image, upon denoising, to generate a first extended-reality image and a second extended-reality image to be rendered via the display apparatus, respectively.

The present disclosure provides the aforementioned imaging system and the aforementioned method incorporating selective denoising, for producing extended-reality images for a display apparatus. Herein, a dedicated denoise level is used to denoise a given image optimally. In this way, the at least one processor can customise a denoising process by selectively denoising images in a required manner such that processor overburdening would not occur during denoising. In this regard, the occupancy of processing resources of the at least one processor is optimized when performing the denoising operation. In other words, selective denoising can beneficially be employed to reduce a computational burden on the at least one processor during denoising. Therefore, the at least one processor can be judiciously used to also perform other graphics or data processing tasks, if required. This facilitates an increase in overall efficiency of the at least one processor. In this manner, the present disclosure provides an imaging system and method that is capable of producing, without excessively burdening its processor, extended-reality images for a display apparatus.

Throughout the present disclosure, the term *"imaging system"* refers to a specialized equipment for capturing images of the real-world environment. The captured images are processed to gather information about the real-world environment in form of the captured pairs of first images and second images, which are then used to generate extended-reality images for the display apparatus. The extended-reality images are to be presented to the user of the display apparatus.

Herein, the term *"extended-reality"* encompasses virtual reality, augmented reality, mixed reality, and the like.

In one embodiment, the extended-reality images are virtual-reality images. The virtual-reality images, when displayed, present a visual scene of a virtual reality environment to the user. In another embodiment, the extended-reality images are augmented-reality images. The augmented-reality images, when displayed, present a visual scene of an augmented reality environment to the user. In yet another embodiment, the extended-reality images are mixed-reality images. The mixed-reality images, when displayed, present a visual scene of a mixed reality environment to the user.

Further, the term *"display apparatus"* refers to a specialized equipment that is configured to present an extended-reality environment to the user when the display apparatus in operation is worn by the user on his/her head. In such an instance, the display apparatus acts as a device (for example, such as an extended-reality headset, a pair of extended-reality glasses, and the like) that is operable to present a visual scene of the extended-reality environment to the user. The visual scene of the extended-reality environment comprises a sequence of extended-reality images. Commonly, the *"display apparatus"* is referred to as *"head-mounted display apparatus",* for the sake of convenience only.

In some implementations, the imaging system is integrated with the display apparatus. In such implementations, the imaging system is physically coupled to the display apparatus (for example, attached via mechanical and electrical connections to components of the display apparatus). Optionally, in such implementations, the at least one processor of the imaging system serves as a processor of the display apparatus. Alternatively, optionally, in such implementations, the at least one processor of the imaging system is communicably coupled to a processor of the display apparatus.

In other implementations, the imaging system is implemented on a remote device that is separate from the display apparatus. In such implementations, the at least one processor and a processor of the display apparatus are communicably coupled via a wired communication interface, a wireless communication interface, or a combination of both. Optionally, the imaging system is mounted on the remote device. Examples of the remote device include, but are not limited to, a drone, a vehicle, and a robot. Optionally, in such an instance, the remote device is physically positioned at the real-world environment, whereas the user of the display apparatus is positioned away from (for example, at a distance from) the remote device.

Further, throughout the present disclosure, the term *"camera"* refers to an equipment that is operable to detect and process light from the real-world environment, so as to capture images of the real-world environment. Optionally, each of the first camera and the second camera comprise a camera chip, wherein the light from the real-world environment is directed by at least one optical element onto a photosensitive surface of the camera chip, thereby enabling the first camera and the second camera to capture the pairs of first images and the second images, respectively, of the given real-world environment. Optionally, the at least one optical element comprises a plurality of optical portions having different magnification factors. In such a case, the light from the real-world environment is differently magnified and/or demagnified by different optical portions of the at least one optical element.

Optionally, when capturing a given image, a given camera is configured to:
- capture a plurality of intermediate images of a plurality of views of the real-world environment; and
- combine the plurality of intermediate images to generate the given image. Such a manner of generating the given image can be referred to as a *"multi-view fusion"* technique. As an example, each of the first camera and the second camera may employ multi-view fusion of four intermediate images to generate the first image and the second image, respectively.

Optionally, a given camera is at least one of: a digital camera, a RGB-D camera, a RGB-IR camera, a RGBW camera, a Time-of-Flight (ToF) camera, a stereo camera, a mono camera.

Moreover, optionally, a given camera is implemented as at least one of: a visible-light camera, an infrared camera, a multispectral camera, a hyperspectral camera.

Throughout the present disclosure, the term *"processor"* refers to hardware, software, firmware or a combination of these. The at least one processor is coupled to various components (such as the first camera and the second camera) of the imaging system wirelessly and/or in a wired manner. The processor is configured to control the operation of the imaging system. It will be appreciated that the term *"at least one processor"* refers to *"one processor"* in some implementations, and "a plurality of processors" in other implementations.

Optionally, the at least one processor is implemented as at least one Graphics Processing Unit (GPU). A GPU is a specialized processing device that is capable of performing graphics processing operations.

The *"first image"* and the *"second image"* of the real-world environment are images captured via the first camera and the second camera, respectively. Notably, the at least one processor is configured to control the first camera and the second camera to perform said image capturing operations. The first image is captured with respect to a perspective of the first eye of the user, while the second image is captured with respect to a perspective of the second eye of the user.

The first camera and the second camera are controlled to capture a plurality of pairs of the first images and the second images of the real-world environment. Each pair among the captured pairs of the first images and the second images constitutes a stereo image pair for the user's eyes. In an example, the processor may control the first camera and the second camera to capture four pairs A1, A2, A3, and A4 of first images and second images. The pair A1 may comprise a first image B1 and a second image B2, the pair A2 may comprise a first image B3 and a second image B4, pair A3 may comprise a first image B5 and a second image B6, and pair A4 may comprise a first image B7 and a second image B8. The first images B1, B3, B5 and B7 are captured for the first eye of the user, whereas the second images B2, B4, B6, and B8 are captured for the second eye of the user.

Throughout the present disclosure, the term *"denoise level"* refers to an extent to which a given image is denoised. The term *"denoising"* refers to a process of removing noise from a noise-contaminated image. When the given image is denoised, noise in the given image may be removed fully or partially.

Optionally, a given denoise level lies in a range of 0 percent to 100 percent. For example, the given denoise level may be from 0, 5, 10, 15, 20, 25, 30, 35, 40, 45, 50, 55, 60, 65, 70, 75, 80, 85, 90 or 95 percent up to 5, 10, 15, 20, 25, 30, 35, 40, 45, 50, 55, 60, 65, 70, 75, 80, 85, 90, 95 or 100 percent.

In an example, the given denoise level for the given image may be a denoise level of 0 percent. In such a case, the given image is not denoised at all (namely, no noise removal occurs). In another example, the given denoise level for the given image may be a denoise level of 25 percent. In yet another example, the given denoise level for the given image may be a denoise level of 50 percent. In still another example, the given denoise level for the given image may be a denoise level of 75 percent. In yet another example, the given denoise level for the given image may be a denoise level of 100 percent. In such a case, the given image is fully denoised.

Optionally, the first denoise level and the second denoise level are equal. In such a case, both the first image and the second image are denoised to a same extent. For example, the first denoise level and the second noise level may be a denoise level of 50 percent.

Alternatively, optionally, the first denoise level is greater than the second denoise level. In such a case, the first image is denoised to a greater extent as compared to the second image. For example, the first denoise level may be a denoise level of 80 percent, whereas the second denoise level may be a denoise level of 20 percent.

Yet alternatively, optionally, the second denoise level is greater than the first denoise level. In such a case, the second image is denoised to a greater extent as compared to the first image. For example, the second denoise level may be a denoise level of 75 percent, whereas the first denoise level may be a denoise level of 25 percent.

Optionally, when denoising the first image and the second image, the at least one processor is configured to employ at least one image denoising algorithm. Optionally, the at least one image denoising algorithm is at least one of:
- a statistical denoising algorithm (for example, such as energy minimization algorithms based on Maximum A Posteriori (MAP) estimation and Markov Random Field (MRF)),
- a variational denoising algorithm (for example, such as Total Variation (TV) regularization, Total Generalized Variation (TGV) regularization, neural network-based variational denoising algorithm),
- a non-local denoising algorithm (for example, such as a Non-Local Means (NLM) algorithm),
- a luminance noise reduction algorithm,
- a chrominance noise reduction algorithm,
- a patch-based algorithm (for example, such as a patch-based Principal Component Analysis (PCA) algorithm, a Probabilistic Patch-Based (PPB) algorithm), a sigma filtering algorithm, a bilateral filtering algorithm, a block-matching and 3D filtering (BM3D) algorithm, a block-matching and 4D filtering (BM4D) algorithm).

Optionally, at least one processor is configured to select the at least one image denoising algorithm to be employed, based on a given denoise level that is required for a given image. When the given denoise level lies in a range of 0 percent to 50 percent, the denoising process may be referred to as *"light denoising".* Further, when the given denoise level lies in a range of 51 percent to 100 percent, the denoising process may be referred to as *"heavy denoising".*

Optionally, one of the first denoise level and the second denoise level is a denoise level of 0 percent. In other words, either the first denoise level is a denoise level of 0 percent or the second denoise level is a denoise level of 0 percent. Therefore, a respective one of the first image and the second image is not denoised at all. The denoise level of 0 percent indicates that no noise is removed from the given image.

It will be appreciated that optionally when the respective one of the first image and the second image is not denoised at all, some processing resources of the at least one processor would not be utilized for denoising such an image. Such a manner of selective denoising can beneficially be employed to reduce a computational burden on the at least one processor during denoising. In such a case, selective denoising may also enable such processing resources to be used for other data processing tasks such as arithmetic operations, logical operations, other graphics-related operations, and the like. This improves an overall efficiency of the at least one processor.

In an embodiment, when the first denoise level is a denoise level of 0 percent, the second denoise level is a denoise level of 100 percent. In such a case, the first image (corresponding to the first denoise level) is not denoised at all, whereas the second image (corresponding to the second denoise level) is fully denoised. In another embodiment, when the second denoise level is a denoise level of 0 percent, the first denoise level is a denoise level of 100 percent. In such a case, the second image (corresponding to the second denoise level) is not denoised at all, whereas the first image (corresponding to the first denoise level) is fully denoised.

It will be appreciated that optionally when one of the first denoise level and the second denoise level is a denoise level of 0 percent, the other one of the first denoise level and the second denoise level could be equal to any denoise level lying in the range of 0 percent to 100 percent. As an example, the first denoise level may be a denoise level of 0 percent, whereas the second denoise level may be a denoise level of 50 percent.

In an embodiment, when denoising, the at least one processor is configured to select the first denoise level and the second denoise level at which the first image and the second image are to be denoised, respectively, in a random manner. In this regard, the first denoise level and the second denoise level are arbitrarily selected by the at least one processor. Notably, the values of the first denoise level and the second denoise level follow a random pattern.

For example, there may be captured four pairs P, Q, R and S of first images and second images of the real-world environment. The pair P may comprise a first image P1 and a second image P2, the pair Q may comprise a first image Q1 and a second image Q2, the pair R may comprise a first image R1 and a second image R2, and the pair S may comprise a first image S1 and a second image S2. When denoising, for the first pair P, the first image P1 may be denoised at a denoise level of 20 percent and the second image P2 may be denoised at a denoise level of 80 percent. When denoising, for the second pair Q, the first image Q1 may be denoised at a denoise level of 100 percent and the second image Q2 may be denoised at a denoise level of 0 percent. When denoising, for the third pair R, the first image R1 may be denoised at a denoise level of 65 percent and the second image R2 may be denoised at a denoise level of 35 percent. When denoising, for the fourth pair S, the first image S1 may be denoised at a denoise level of 50 percent and the second image S2 may be denoised at a denoise level of 50 percent.

In another embodiment, when denoising, the at least one processor is configured to select the first denoise level and the second denoise level at which the first image and the second image are to be denoised, respectively, in a predetermined manner. In this regard, the first denoise level and the second denoise level may be selected by the at least one processor in a manner that values of the first denoise level and the second denoise level follow a predetermined pattern. The predetermined pattern could be a linear pattern, a non-linear pattern, a step-wise pattern, and the like.

For example, there may be captured four pairs C, D, E and F of first images and second images of the real-world environment. The pair C may comprise a first image C1 and a second image C2, the pair D may comprise a first image D1 and a second image D2, the pair E may comprise a first image E1 and a second image E2, and the pair F may comprise a first image F1 and a second image F2. When denoising, for the first pair C, the first image C1 may be denoised at a denoise level of 0 percent and the second image C2 may be denoised at a denoise level of 100 percent. When denoising, for the second pair D, the first image D1 may be denoised at a denoise level of 50 percent and the second image D2 may be denoised at a denoise level of 50 percent. When denoising, for the third pair E, the first image E1 may be denoised at a denoise level of 0 percent and the second image E2 may be denoised at a denoise level of 100 percent. When denoising, for the fourth pair F, the first image F1 may be denoised at a denoise level of 50 percent and the second image F2 may be denoised at a denoise level of 50 percent.

The first image and the second image are processed (by the at least one processor), upon denoising, to generate the first extended-reality image and the second extended-reality image. Herein, the *"first extended-reality image"* and the *"second extended-reality image"* refer to extended-reality images that are generated from the first image and the second image, respectively, upon denoising of the first image and the second image. The first extended-reality image is a view of an extended-reality scene from a perspective of the first eye of the user, whereas the second extended-reality image is a view of an extended-reality scene from a perspective of the second eye of the user. The first extended-reality image and the second extended-reality image constitute a stereo extended-reality image pair for the user's eyes.

Optionally, the at least one processor is configured to employ at least one image processing algorithm to process the first image and the second image, upon denoising, to generate a first virtual-reality image and a second virtual-reality image. Optionally, in this regard, the at least one image processing algorithm is at least one of: an image cropping algorithm, an image flipping algorithm, an image rotating algorithm, an image sharpening algorithm, an image smoothing algorithm, an image blurring algorithm, an image resizing algorithm, an image orientation algorithm, an image colour-change algorithm, an image merging algorithm, an image slicing algorithm, an image layering algorithm, an image blending algorithm, an image special-effects algorithm.

Optionally, the at least one processor is configured to digitally superimpose at least one virtual object upon the first image and/or the second image when processing the first image and the second image, upon denoising, to generate a first augmented-reality image and a second augmented-reality image.

Optionally, the at least one processor is configured to digitally superimpose at least one virtual object upon the first image and/or the second image when processing the first image and the second image, upon denoising, to generate a first mixed-reality image and a second mixed-reality image.

Herein, the term *"virtual object"* refers to a computer-generated object. Examples of the virtual object include, but are not limited to, a virtual navigation tool (such as a virtual map, a virtual direction signage, and so forth), a virtual gadget (such as a virtual calculator, a virtual computer, and so forth), a virtual message (such as a virtual instant message, a virtual chat conversation, a virtual to-do note, and so forth), a virtual entity (such as a virtual person, a virtual animal, a virtual ghost, and so forth), a virtual entertainment media (such as a virtual painting, a virtual video, a virtual interactive advertisement, and so forth), and a virtual information (such as a virtual news description, a virtual announcement, virtual data, and so forth).

Optionally, the at least one processor is configured to employ the at least one image processing algorithm to further process a given augmented-reality image or a given mixed-reality image.

Optionally, when the at least one processor is communicably coupled to the processor of the display apparatus, the first extended-reality image and the second extended-reality image are communicated from the imaging system to the display apparatus.

Optionally, the at least one processor is configured to obtain information indicative of an ocular dominance of the user, wherein, when denoising, the at least one processor is configured to select, based on the ocular dominance of the user, the first denoise level and the second denoise level at which the first image and the second image are to be denoised, respectively.

Throughout the present disclosure, the term *"ocular dominance"* refers to a tendency of the user's eyes to prefer visual input from one eye to another eye of the user. A given eye of the user whose visual input is preferred is referred to as a *"dominant eye"* of the user.

Throughout the present disclosure, the term *"information indicative of an ocular dominance of the user"* refers to information that indicates the preference the user's eyes. In particular, the information indicative of the ocular dominance of the user indicates which eye of the user is the dominant eye. The dominant eye may be either the first eye of the user or the second eye of the user.

In an embodiment, the information indicative of the ocular dominance of the user is pre-determined and pre-stored for the user, at a data repository. In such a case, the information indicative of the ocular dominance of the user is obtained, by the at least one processor, from the data repository. The at least one processor is coupled to the data repository, either directly or via a communication network. The term *"data repository"* refers to hardware, software, firmware, or a combination of these for storing a given information in an organized (namely, structured) manner, thereby, allowing for easy storage, access (namely, retrieval), updating and analysis of the given information. It will be appreciated that the data repository is implemented by way of a database arrangement, a database server, and the like.

Optionally, the ocular dominance of the user is pre-determined by an ophthalmologist. In a such case, the ophthalmologist conducts at least one eye test for the user's eyes to generate the information indicative of the ocular dominance of the user, wherein said information comprises eye-testing data. Optionally, the information indicative of the ocular dominance of the user is communicated from a device associated with the ophthalmologist, to the data repository. In such a case, the device associated with the ophthalmologist is coupled to the data repository either directly or via a communication network. Examples of the device include, but are not limited to, a computer, a smartphone, and a tablet. At the data repository, the information indicative of the ocular dominance of the user would be stored and can be later obtained by the at least one processor. It will be appreciated that the data repository is optionally used to store information indicative of ocular dominance of a plurality of users.

Optionally, the ocular dominance of the user is pre-determined by the at least one processor. In such a case, the at least one processor is configured to conduct a virtual eye test for the user's eyes to generate the information indicative of the ocular dominance of the user. The virtual eye test is similar to conventional eye tests conducted by ophthalmologists. Optionally, the at least one processor is configured to store, at the data repository, the information indicative of the ocular dominance of the user.

In another embodiment, the information indicative of the ocular dominance of the user is obtained, by the at least one processor, from the display apparatus, wherein the display apparatus comprises a plurality of gaze-tracking cameras. In such a case, the plurality of gaze-tracking cameras are used to generate eye-tracking data for the user during initial calibration of the display apparatus according to the user's eyes. Notably, the eye-tracking data constitutes the information indicative of the ocular dominance of the user. Optionally, the plurality of gaze-tracking cameras are communicably coupled to the at least one processor of the imaging system.

Optionally, the eye-tracking data comprises images of both eyes of the user, said images being captured when the user views at least one reference image during the initial calibration of the display apparatus. Herein, the term *"reference image"* refers to an image that is to be used for calibrating the display apparatus according to the user's eyes.

In yet another embodiment, the information indicative of the ocular dominance of the user is obtained, by the at least one processor, from a computing device associated with the display apparatus. In such a case, the display apparatus comprises a plurality of gaze-tracking cameras, wherein the plurality of gaze-tracking cameras are used to generate eye-tracking data for the user during initial calibration of the display apparatus according to the user's eyes. Notably, the eye-tracking data constitutes the information indicative of the ocular dominance of the user. Moreover, in such a case, the plurality of gaze-tracking cameras are communicably coupled with the computing device, wherein the plurality of gaze-tracking cameras communicate the eye-tracking data for the user to the computing device.

Throughout the present disclosure, the term *"computing device"* refers to an external computing device that is associated with the display apparatus, and that performs data processing operations for the display apparatus. Optionally, the computing device comprises at least one external processor configured to perform the data processing operations for the display apparatus. In an example implementation, the computing device may be a graphics processing device. In another example implementation, the computing device may be a personal computer.

Optionally, the display apparatus is communicably coupled to the computing device. In this regard, the plurality of gaze-tracking cameras are communicably coupled to the at least one external processor.

Optionally, the computing device is communicably coupled to the imaging system. In this regard, the at least one external processor is communicably coupled to the at least one processor of the imaging system.

It will be appreciated that communicative coupling between any two given elements is implemented via a wired communication interface, a wireless communication interface, or a combination of both. Moreover, the communicative coupling could also be implemented via at least one intermediate element between the two given elements.

Optionally, the at least one processor is configured to select, based on the ocular dominance of the user, the first denoise level and the second denoise level in a manner that a denoise level corresponding to an image that is to be shown to the dominant eye of the user is greater than a denoise level corresponding to another image that is to be shown to a non-dominant eye of the user. In other words, the first denoise level and the second denoise level are selected in a manner that the image that is to shown to the dominant eye of the user is heavily denoised, whereas the image that is to be shown to a non-dominant eye of the user is lightly denoised. It will be appreciated that the selection of the first and second denoise levels is optionally performed in the aforesaid manner since the visual input of the dominant eye is preferred over the visual input of the non-dominant eye. It is therefore desirable that the dominant eye is shown a highly-noise free image.

In an example, the first eye of the user may be the dominant eye, whereas the second eye of the user may be the non-dominant eye. In such a case, the first denoise level may be a denoise level of 75 percent, whereas the second denoise level may be a denoise level of 25 percent. Notably, in this case, the first image that is shown to the first eye is heavily denoised, whereas the second image that is shown to the second eye of is lightly denoised.

Optionally, when denoising a given image, the at least one processor is configured to:
- divide the given image into a plurality of image segments; and
- denoise at least two of the plurality of image segments at different denoise levels.

Herein, the given image refers to either the first image or the second image or both of the first image and the second image.

Further, throughout the present disclosure, a given *"image segment"* of a given image refers to a given slice (namely, a portion) of the given image. The plurality of image segments of the given image collectively constitute an entirety of the given image. Moreover, the given image segment comprises a set of pixels within the given image.

It will be appreciated that the given image can be divided into the plurality of image segments in a uniform manner or a non-uniform manner. In other words, the plurality of image segments may have a uniform shape and size or a non-uniform shape and size. As an example, the given image may be divided into four equi-sized rectangular image segments. In another example, the given image may be divided into five image segments, wherein a square-shaped image segment is surrounded by four equi-sized trapezoidal image segments.

Optionally, when dividing the given image into the plurality of image segments, the at least one processor is configured to employ at least one image segmentation algorithm. The at least one image segmentation algorithm enables partitioning of the given image into the plurality of image segments in a manner that a given criterion is satisfied. Image segmentation algorithms are well-known in the art.

In an embodiment, the given criterion is satisfied when the given image is equally partitioned into a required number of image segments. In another embodiment, the given criterion is satisfied when each image segment among the plurality of image segments corresponds to an object represented in the given image. In yet another embodiment, the given criterion is satisfied when a central portion of the given image is divided into at least one central image segment, and a remaining portion of the given image is equally partitioned into a required number of peripheral image segments. In still another embodiment, the given criterion is satisfied when each image segment among the plurality of image segments corresponds to a distinct texture represented in the given image. In yet another embodiment, the given criterion is satisfied when each image segment among the plurality of image segments corresponds to pixels having a uniform (namely, same) color. In still another embodiment, the given criterion is satisfied when a number of image segments is equal to a number of optical portions of the at least one optical element and different image segments have different sizes.

Optionally, the number of image segments among the plurality of image segments is defined by a manufacturer of the imaging system, randomly selected by the at least one processor, or dynamically selected by the at least one processor, based on the given criterion.

It will be appreciated that the at least two of the plurality of image segments are optionally denoised at different denoise levels. In such a case, the different denoise levels cause the given image to be denoised to different extents in different portions. In other words, an extent to which noise is reduced across the given image is variable. Such a manner of selective denoising can beneficially be employed to reduce a computational burden on the at least one processor during denoising, as the image segments of the given image that do not require heavy denoising could optionally be lightly denoised. As an example, when the given image depicts an object having an intricate design, at least one image segment including that object could be denoised at a denoise level of 100 percent. In such an example, remaining image segment(s) could be denoised at a denoise level of, for example, 50 percent. As another example, image segments corresponding to high-frequency textures (namely, rough textures) could be lightly denoised whereas image segments corresponding to low-frequency textures (namely, smooth textures) could be heavily denoised. As yet another example, when image segments that correspond to pixels having a uniform color may be lightly denoised as luminance noise reduction for such image segments may not be required. As still another example, different denoise levels may be employed for differently-sized image segments.

It will also be appreciated that by optionally using the different denoise levels during denoising, an entirety of the given image need not be heavily denoised, but instead the processing resources of the at least one processor can be optimally utilized to heavily denoise only those portions of the given image that require a high level of noise reduction. Selective denoising may also unburden some processing resources of the at least one processor from performing the denoising operation, thereby, enabling those processing resources to be used for other data processing tasks. This improves an overall efficiency of the at least one processor.

In an example, a given image X may be divided into eight image segments X1, X2, X3, X4, X5, X6, X7 and X8. Herein, the at least one processor may be configured to denoise the image segments X2 and X7 at denoise levels of 20 percent and 70 percent, respectively, and may denoise the remaining image segments X1, X3, X4, X5, X6, and X8 at a denoise level of 50 percent.

In another example, for a given pair G comprising a first image H and a second image J, the first image H may be divided into eight image segments H1, H2, H3, H4, H5, H6, H7 and H8, whereas the second image J may be divided into eight image segments J1, J2, J3, J4, J5, J6, J7 and J8. Herein, the at least one processor may be configured to selectively denoise the image segments H1-H8 and J1-J8. The image segments H1, H2, H3, H4, H5, H6, H7 and H8 may be denoised at a denoise level of 20 percent, 30 percent, 40 percent, 50 percent, 60 percent, 70 percent, 80 percent and 90 percent, respectively and the corresponding image segments J1, J2, J3, J4, J5, J6, J7 and J8 may be denoised at a denoise level of 80 percent, 70 percent, 60 percent, 50 percent, 40 percent, 30 percent, 20 percent and 10 percent, respectively.

In yet another example, there for a given pair K comprising a first image K1 and a second image K2, the first image K1 may comprise three image segments L1, L2, and L3, whereas the second image K2 may comprise three image segments M1, M2, and M3. Herein, the image segments L1-L3 and M1-M3 may be denoised at a denoise level lying in a range of 0 percent to 100 percent. A maximum possible denoising computation burden on the at least one processor may be equal to β. In a first case, the image segment L1 may be denoised at a denoise level of 100 percent, while its corresponding image segment M1 may be denoised at a denoise level of 0 percent. In such a case, a denoising computation burden on the at least one processor may be approximately equal to 50 percent of β. In a second case, the image segment L2 may be denoised at a denoise level of 50 percent, while its corresponding image segment M2 may be denoised at a denoise level of 100 percent. In such a case, the denoising computation burden may be approximately equal to 75 percent of β. In a third case, both the image segments L3 and M3 may be denoised at a denoise level of 100 percent. In such a case, the denoising computation burden may be equal to β.

Optionally, when denoising the given image, the at least one processor is configured to:
- select at least one of the plurality of image segments in a random manner; and
- denoise the at least one of the plurality of image segments at a denoise level of 0 percent.

Optionally, in this regard, at least one randomly selected image segment is denoised at a denoise level of 0 percent. The at least one randomly selected image segment is not denoised at all. It will be appreciated that randomly selecting one or more image segments to be denoised at the denoise level of 0 percent enables said selective denoising to be imperceptible in a given extended-reality image that is generated from the denoised given image. Such a manner of selective denoising using the random selection is even less perceptible in images that are divided into a large number of image segments. Moreover, when said random selection of image segment(s) for denoising at the denoise level of 0 percent is performed for a given sequence of images to be denoised, a distribution of un-denoised (namely, noisy) image segments across the sequence of given images is also random. As a result, a given sequence of extended-reality images that are generated using the denoised given sequence of images also exhibit randomness of noisy portions therein. The user is unable to perceive these noisy portions as they are intermixed with remaining denoised portions of the given sequence of extended-reality images. If only specific image segment(s) were selectively denoised at the denoise level of 0 percent for the given sequence of images to be denoised, corresponding image segments of the given sequence of extended-reality images would always appear noisy to the user, and the user's immersion within the extended-reality environment would be adversely impacted.

Moreover, it will be appreciated that optionally denoising a given (randomly selected) image segment at the denoise level of 0 percent enables saving of some processing resources of the at least one processor, as the at least one processor need not spend any processing resource towards denoising of the given image segment.

Furthermore, it will be appreciated that greater the number of randomly selected image segment(s) to be denoised at the denoise level of 0 percent, greater are the processing resource savings for the at least one processor. However, if the number of the randomly selected image segment(s) is very high, the given image would appear noisy even upon denoising. Therefore, the number of the at least one image segment that is selected in the random matter is to be determined based on a trade-off between an acceptable amount of noise in the given image upon denoising and a required amount of processing resource savings. Optionally, a maximum number of image segment(s) that can be randomly selected to be denoised at the denoise level of 0 percent is equal to 50 percent of a total number of the plurality of image segments into which the given image is divided. As an example, when the given image is divided into 20 image segments, a maximum of 10 image segments could be randomly selected to be denoised at the denoise level of 0 percent.

In an example, a given image N may be divided into eight image segments N1, N2, N3, N4, N5, N6, N7 and N8. Herein, the image segment N3 may be randomly selected to be denoised at a denoise level of 0 percent, while all the other image segments N1, N2, N4, N5, N6, N7 and N8 may be denoised at a denoise level of 50 percent.

In another example, given a pair T comprising a first image T1 and a second image T2, the first image T1 may be divided into four image segments U1, U2, U3, and U4, whereas the second image T2 may be divided into four image segments V1, V2, V3, and V4. Herein, when denoising the first image T1, the image segment U4 may be randomly selected to be denoised at a denoise level of 0 percent. Similarly, when denoising the second image T2, the image segments V1 and V2 may be randomly selected to be denoised at a denoise level of 0 percent.

Optionally, when denoising the given image, the at least one processor is configured to:
- analyze the pairs of first images and second images to determine at least one of the plurality of image segments that is representative of at least one moving object present in the real-world environment; and
- denoise the at least one of the plurality of image segments at a denoise level that lies in a range of 0 percent to 25 percent.

Optionally, in this regard, the pairs of first images and second images are analyzed, by the at least one processor, to determine optical flows of the at least one moving object present in the real-world environment. Herein, the term *"optical flow"* refers to a pattern of apparent motion of the at least one moving object across the pairs of first images and second images. In other words, the optical flow provides information pertaining to motion of the at least one moving object present in a scene of the real-world environment.

Optionally, when analyzing the pairs of first images and second images, the at least one processor is configured to employ at least one optical flow computation technique or at least one segment-matching technique. In the at least one optical flow computation technique, a manner in which pixel intensities change across the pairs of first images and second images is identified, said change of pixel intensities corresponding to the motion of the at least one moving object. Image segment(s) that comprise the pixels whose pixel intensities change across the pairs of first images and second images are determined to be the at least one of the plurality of image segments that is representative of the at least one moving object. Optical flow computation techniques are well known in the art. In the at least one segment-matching technique, image segments of a given pair of first and second images are matched with image segments of at least one subsequent pair of first and second images to determine the at least one image segment that is representative of the at least one moving object. Segment-matching techniques are well known in the art.

Optionally, the at least one of the plurality of image segments is denoised at the denoise level that lies in the range of 0 percent to 25 percent. It will be appreciated that generally, the at least one of the plurality of image segments that is representative of the at least one moving object includes motion blur, as the motion of the at least one moving object tends to make the at least one moving object appear blurry in the given image. In other words, a certain degree of blurring is expected in image segment(s) corresponding to the at least one moving object. Therefore, the at least one of the plurality of image segments is optionally lightly denoised at the denoise level that lies in the range of 0 percent to 25 percent, in order to save processing resources of the at least one processor. Such a manner of selective denoising can beneficially be employed to optimize the occupancy of the at least one processor when performing the denoising operation. In this regard, the at least one processor can judiciously be used to perform other data processing tasks along with selective denoising. This helps in increase of overall efficiency of the at least one processor.

It will be appreciated that when the at least one processor is optionally configured to denoise the at least one of the plurality of image segments at the denoise level that lies in the range of 0 percent to 25 percent, the denoise level may be from 0, 5, 10, 15 or 20 percent up to 5, 10, 15, 20 or 25 percent.

In an example, there may be captured four pairs W, X, Y and Z of first images and second images. The pair W may comprise a first image W1 and a second image W2, the pair X may comprise a first image X1 and a second image X2, the pair Y may comprise a first image Y1 and a second image Y2, and the pair Z may comprise a first image Z1 and a second image Z2. Herein, each image may be divided into nine image segments O1, O2, O3, O4, O5, O6, O7, O8 and O9. When denoising, for example, the first image W1, the four pairs W, X, Y and Z of first images and second images may be analyzed to determine that image segment O4 of the first image W1 is representative of a given moving object present in the real-world environment. Therefore, the image segment O4 of the first image X1 may be denoised at a denoise level of 15 percent. Likewise, when denoising, for example, the first image X1, the four pairs W, X, Y and Z of first images and second images may be analyzed to determine that image segment O5 of the first image X1 is representative of the given moving object present in the real-world environment. Therefore, the image segment O5 of the first image X1 may be denoised at a denoise level of 10 percent. Likewise, when denoising, for example, the second image Y2, the four pairs W, X, Y and Z of first images and second images may be analyzed to determine that image segment O7 of the second image Y2 is representative of the given moving object present in the real-world environment. Therefore, the image segment O7 of the second image Y2 may be denoised at a denoise level of 12 percent.

Optionally, the at least one processor is configured to:
- obtain, from the display apparatus, information indicative of a blink or saccade of the user's eyes; and
- stop denoising for a given image that is to be rendered during the blink or saccade of the user's eyes.

Throughout the present disclosure, the term *"information indicative of a blink or saccade of the user's eyes"* refers to information indicating occurrence of the blink or saccade of the user's eyes. Optionally, the information indicative of the blink or saccade of the user's eyes comprises at least one of: a time at which the blink or saccade occurs, a predicted time at which the blink or saccade is expected to occur, a frequency of occurrence of blinks, a frequency of occurrence of saccades. Herein, the term *"saccade"* encompasses both voluntary saccades and involuntary microsaccades.

Optionally, the information indicative of the blink or saccade of the user's eyes is derived from the eye-tracking data of the user that is generated at the display apparatus via the plurality of gaze-tracking cameras. In this regard, the at least one processor is configured to process the eye-tracking data of the user to derive the information indicative of the blink or saccade of the user's eyes.

Alternatively, optionally, the information indicative of the blink or saccade of the user's eyes is derived from images of the user's eyes that are captured by at least one camera pointing at the user's eyes. In such a case, the information indicative of the blink or saccade of the user's eyes may be in form of the captured images of the user's eyes. Moreover, in such a case, the at least one processor is configured to obtain the captured images of the user's eyes from the at least one camera, and to process the captured images of the user's eyes to derive the information indicative of the blink or saccade of the user's eyes. It will be appreciated that the at least one camera is arranged within the display apparatus in manner that the information indicative of the blink or saccade of the user's eyes camera faces the user's eyes.

Yet alternatively, optionally, the information indicative of the blink or saccade of the user's eyes is derived from eye-blink sensor data measured by an eye-blink sensor. In such a case, the eye-blink sensing data optionally comprises: at least one of: a rate of eye-blinking, a displacement of eyelid during eye movement. In this regard, the at least one processor is configured to obtain the eye-blink sensor data from the eye-blink sensor, and to process the eye-blink sensor data of the user to derive the information indicative of the blink or saccade of the user's eyes. Eye-blink sensors are well-known in the art.

Still alternatively, optionally, the information indicative of the blink or saccade of the user's eyes is derived from sensor data that is measured at the display apparatus via sensors of the display apparatus. In such a case, the sensors of the display apparatus are optionally configured to sense a movement of nerves and/or muscles near the user's eyes to generate the sensor data. Moreover, in this regard, the at least one processor is configured to obtain the sensor data of the user from the sensors of the display apparatus, and to process the sensor data to derive the information indicative of the blink or saccade of the user's eyes.

It will be appreciated that the at least one processor optionally stops denoising for the given image that is to be rendered during the blink or saccade of the user's eyes, since during the blink or saccade of the user's eyes, the given image is not visible to the user's eyes. Notably, this stoppage of denoising is only temporary, and lasts only for the duration of the blink or saccade of the user's eyes. Otherwise, apart from the duration of the blink saccade of the user's eyes, the given image is denoised as usual (described above). Such a manner of selective denoising can beneficially be employed to reduce a computational burden on the at least one processor during denoising, as the at least one processor optionally stops denoising for the given image that is to be rendered during the blink or saccade of the user's eyes. In this regard, selective denoising can beneficially be employed to optimize the occupancy of the at least one processor when performing the denoising operation and the at least one processor can judiciously be used to perform other data processing tasks. This helps in increase of overall efficiency of the at least one processor.

The present disclosure also relates to the method as described above. Various embodiments and variants disclosed above, with respect to the aforementioned first aspect, apply mutatis mutandis to the method.

Optionally, the method further comprises obtaining information indicative of an ocular dominance of the user, wherein the step of denoising comprises selecting, based on the ocular dominance of the user, the first denoise level and the second denoise level at which the first image and the second image are to be denoised, respectively.

Optionally, in the method, the step of denoising comprises selecting the first denoise level and the second denoise level at which the first image and the second image are to be denoised, respectively, in a random manner.

Optionally, in the method, one of the first denoise level and the second denoise level is a denoise level of 0 percent.

Optionally, in the method, the step of denoising a given image comprises:
- dividing the given image into a plurality of image segments; and
- denoising at least two of the plurality of image segments at different denoise levels.

Optionally, in the method, the step of denoising the given image comprises:
- selecting at least one of the plurality of image segments in a random manner; and
- denoising the at least one of the plurality of image segments at a denoise level of 0 percent.

Optionally, in the method, the step of denoising the given image comprises:
- analyzing the pairs of first images and second images to determine at least one of the plurality of image segments that is representative of at least one moving object present in the real-world environment; and
- denoising the at least one of the plurality of image segments at a denoise level that lies in a range of 0 percent to 25 percent.

Optionally, the method further comprises:
- obtaining, from the display apparatus, information indicative of a blink or saccade of the user's eyes; and
- stopping denoising for a given image that is to be rendered during the blink or saccade of the user's eyes.

### DETAILED DESCRIPTION OF THE DRAWINGS

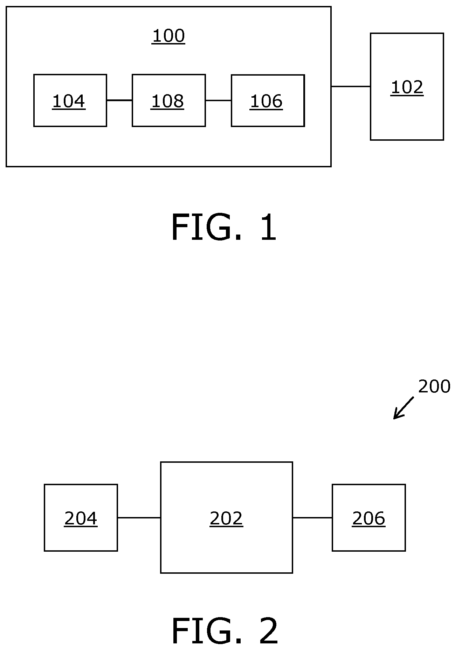

Referring to FIG. 1, illustrated is a block diagram of architecture of an imaging system **100** for producing extended-reality images for a display apparatus **102,** in accordance with an embodiment of the present disclosure. The imaging system **100** comprises a first camera **104,** a second camera **106** and at least one processor (depicted as a processor **108)** configured to:
- control the first camera **104** and the second camera **106** to capture pairs of first images and second images of a real-world environment, respectively, wherein a given pair comprises a first image and a second image captured for a first eye and a second eye of a user, respectively;
- denoise the first image and the second image at a first denoise level and a second denoise level, respectively; and
- process the first image and the second image, upon denoising, to generate a first extended-reality image and a second extended-reality image to be rendered via the display apparatus **102,** respectively.

Referring to FIG. 2, illustrated is an exemplary environment **200** in which an imaging system **202** is used, in accordance with an embodiment of the present disclosure. The imaging system **202** is coupled to a display apparatus **204,** either directly or via a communication network (not shown). The imaging system **202** is also shown to be coupled to a data repository **206.** The data repository **206** may be used to store information indicative of an ocular dominance of a user.

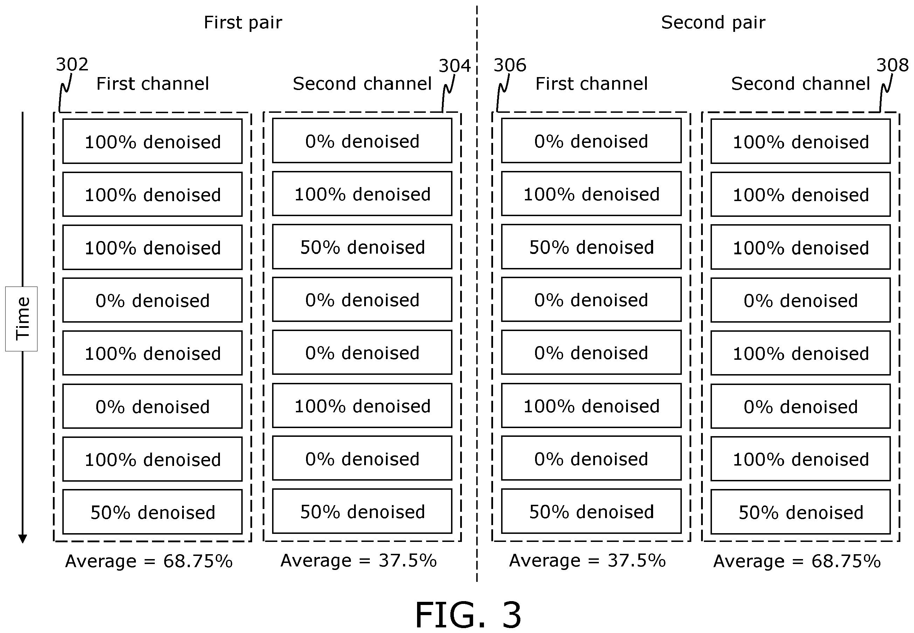

Referring to FIG. 3, illustrated is how two consecutive pairs of first images and second images are denoised, in accordance with an embodiment of the present disclosure. Herein, the first pair comprises a first image **302** and a second image **304,** wherein the first image **302** belongs to a first channel associated with a first eye and the second image **304** belongs to a second channel associated with a second eye. Likewise, the second pair comprises a first image **306** and a second image **308,** wherein the first image **306** belongs to the first channel and the second image **308** belongs to the second channel. Said communication occurs from an imaging system to a display apparatus. As shown, each image **302, 304, 306,** and **308** is divided into eight image segments. For each image **302, 304, 306,** and **308,** at least two of the eight image segments are denoised at different denoise levels. Herein, each image segment is denoised at a denoise level lying in a range of 0 percent to 100 percent. Moreover, the denoise levels for the eight image segments of a given image are shown to vary over a time period of denoising the given image.

In an example, for the first image **302** (of the first pair), five image segments (notably, first, second, third, fifth and seventh image segments) are denoised at a denoise level of 100 percent, two image segments (notably, fourth and sixth image segments) are denoised at a denoise level of 0 percent, and one image segment (notably, eighth image segment) is denoised at a denoise level of 50 percent. In another example, for the first image **306** (of the second pair), two image segments (notably, second and sixth image segments) are denoised at a denoise level of 100 percent, four image segments (notably, first, fourth, fifth and seventh image segments) are denoised at a denoise level of 0 percent, and two image segments (notably, third and eighth image segments) are denoised at a denoise level of 50 percent.

It may be understood by a person skilled in the art that the FIG. 3 is merely an example illustration for sake of clarity, which should not unduly limit the scope of the claims herein. The person skilled in the art will recognize many variations, alternatives, and modifications of embodiments of the present disclosure.

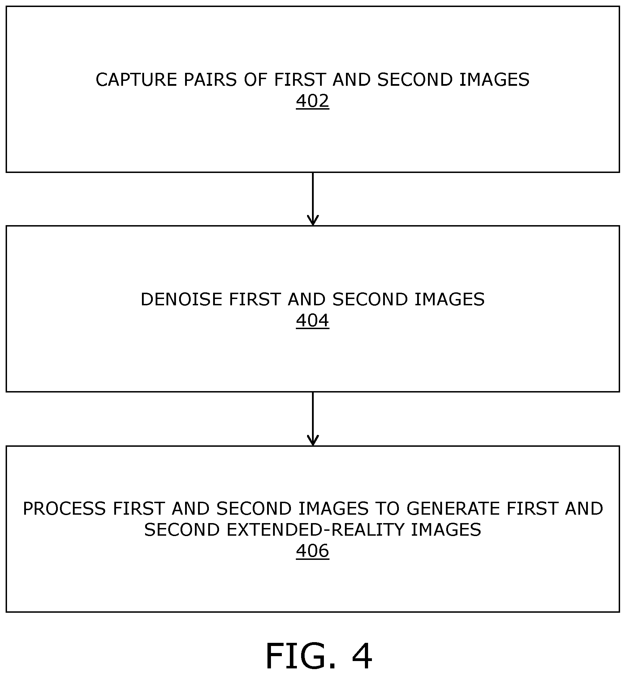

Referring to FIG. 4, illustrated are steps of a method of producing extended-reality images for a display apparatus, in accordance with an embodiment of the present disclosure. At step **402,** pairs of first images and second images of a real-world environment are captured. A given pair comprises a first image and a second image captured for a first eye and a second eye of a user, respectively. At step **404,** the first image and the second image are denoised at a first denoise level and a second denoise level, respectively. At step **406,** the first image and the second image are processed, upon denoising, to generate a first extended-reality image and a second extended-reality image to be rendered via the display apparatus, respectively.

The steps **402** to **406** are only illustrative and other alternatives can also be provided where one or more steps are added, one or more steps are removed, or one or more steps are provided in a different sequence without departing from the scope of the claims herein.

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. An imaging system (100, 202) for producing extended-reality images for a display apparatus (102, 204), the imaging system comprising a first camera (104), a second camera (106) and at least one processor (108) configured to:
- control the first camera and the second camera to capture pairs of first images and second images of a real-world environment, respectively, wherein a given pair comprises a first image and a second image captured for a first eye and a second eye of a user, respectively;
- denoise the first image and the second image at a first denoise level and a second denoise level, respectively; and
- process the first image and the second image, upon denoising, to generate a first extended-reality image and a second extended-reality image to be rendered via the display apparatus, respectively.

2. The imaging system (100, 202) of claim 1, wherein the at least one processor (108) is configured to obtain information indicative of an ocular dominance of the user, wherein, when denoising, the at least one processor is configured to select, based on the ocular dominance of the user, the first denoise level and the second denoise level at which the first image and the second image are to be denoised, respectively.

3. The imaging system (100, 202) of claim 1, wherein, when denoising, the at least one processor (108) is configured to select the first denoise level and the second denoise level at which the first image and the second image are to be denoised, respectively, in a random manner.

4. The imaging system (100, 202) of claim 1, 2 or 3, wherein one of the first denoise level and the second denoise level is a denoise level of 0 percent.

5. The imaging system (100, 202) of any of the preceding claims, wherein, when denoising a given image, the at least one processor (108) is configured to:
- divide the given image into a plurality of image segments; and
- denoise at least two of the plurality of image segments at different denoise levels.

6. The imaging system (100, 202) of claim 5, wherein, when denoising the given image, the at least one processor (108) is configured to:
- select at least one of the plurality of image segments in a random manner; and
- denoise the at least one of the plurality of image segments at a denoise level of 0 percent.

7. The imaging system (100, 202) of claim 5 or 6, wherein, when denoising the given image, the at least one processor (108) is configured to:
- analyze the pairs of first images and second images to determine at least one of the plurality of image segments that is representative of at least one moving object present in the real-world environment; and
- denoise the at least one of the plurality of image segments at a denoise level that lies in a range of 0 percent to 25 percent.

8. The imaging system (100, 202) of any of the preceding claims, wherein the at least one processor (108) is configured to:
- obtain, from the display apparatus (102, 204), information indicative of a blink or saccade of the user's eyes; and
- stop denoising for a given image that is to be rendered during the blink or saccade of the user's eyes.

9. A method of producing extended-reality images for a display apparatus (102, 204), the method comprising:
- capturing pairs of first images and second images of a real-world environment, respectively, wherein a given pair comprises a first image and a second image captured for a first eye and a second eye of a user, respectively;
- denoising the first image and the second image at a first denoise level and a second denoise level, respectively; and
- processing the first image and the second image, upon denoising, to generate a first extended-reality image and a second extended-reality image to be rendered via the display apparatus, respectively.

10. The method of claim 9, further comprising obtaining information indicative of an ocular dominance of the user, wherein the step of denoising comprises selecting, based on the ocular dominance of the user, the first denoise level and the second denoise level at which the first image and the second image are to be denoised, respectively.

11. The method of claim 9, wherein the step of denoising comprises selecting the first denoise level and the second denoise level at which the first image and the second image are to be denoised, respectively, in a random manner.

12. The method of claim 9, 10 or 11, wherein one of the first denoise level and the second denoise level is a denoise level of 0 percent.

13. The method of any of claims 9-12, wherein the step of denoising a given image comprises:
- dividing the given image into a plurality of image segments; and
- denoising at least two of the plurality of image segments at different denoise levels.

14. The method of claim 13, wherein the step of denoising the given image comprises:
- selecting at least one of the plurality of image segments in a random manner; and
- denoising the at least one of the plurality of image segments at a denoise level of 0 percent.

15. The method of claim 13 or 14, wherein the step of denoising the given image comprises:
- analyzing the pairs of first images and second images to determine at least one of the plurality of image segments that is representative of at least one moving object present in the real-world environment; and
- denoising the at least one of the plurality of image segments at a denoise level that lies in a range of 0 percent to 25 percent.

16. The method of any of claims 9-15, further comprising:
- obtaining, from the display apparatus (102, 204), information indicative of a blink or saccade of the user's eyes; and
- stopping denoising for a given image that is to be rendered during the blink or saccade of the user's eyes.
